(19) Europäisches Patentamt
European Patent Office
Office européen des brevets

(11) **EP 1 371 768 B1**

(12) **EUROPEAN PATENT SPECIFICATION**

(45) Date of publication and mention
of the grant of the patent:
**11.08.2010   Bulletin 2010/32**

(51) Int Cl.:
***D04B 21/10*** *(2006.01)*          ***A01F 15/07*** *(2006.01)*

(21) Application number: **03018521.9**

(22) Date of filing: **30.10.1998**

(54) **Schuss knitted netting**

Schuss gewirktes Netz

Filet tricoté à trame

(84) Designated Contracting States:
**AT BE CH CY DE DK ES FI FR GB GR IE IT LI LU MC NL PT SE**

(30) Priority: **25.11.1997   US 978235**

(43) Date of publication of application:
**17.12.2003   Bulletin 2003/51**

(62) Document number(s) of the earlier application(s) in accordance with Art. 76 EPC:
**98308916.0 / 0 919 655**

(73) Proprietor: **Tama Plastic Industry**
**19236 Mishmar Ha'Emek (IL)**

(72) Inventors:
• **Mass, Nissim**
**19236 Israel (IL)**

• **Leiber, Yuval**
**19236 Israel (IL)**

(74) Representative: **Grey, Ian Michael et al**
**Venner Shipley LLP**
**20 Little Britain**
**London EC1A 7DH (GB)**

(56) References cited:
**EP-A- 0 304 977     DE-A- 4 301 232**
**FR-A- 2 061 251     US-A- 4 569 439**

• **W. SCHINKOREIT: "Wirktechniken durch Fadenreservebildungen" MELLIAND TEXTILBERICHTE, 1 December 1995 (1995-12-01), pages 1090-1090, Frankfurt**

## Description

This invention relates to knitted netting, and more particularly, to knitted netting as is used in wrapping, e.g. loads on pallets and bales of agricultural products. More particularly, the invention relates to knitted netting used in wrapping wherein the knitted netting is designed to minimise the transverse shrinkage of the netting.

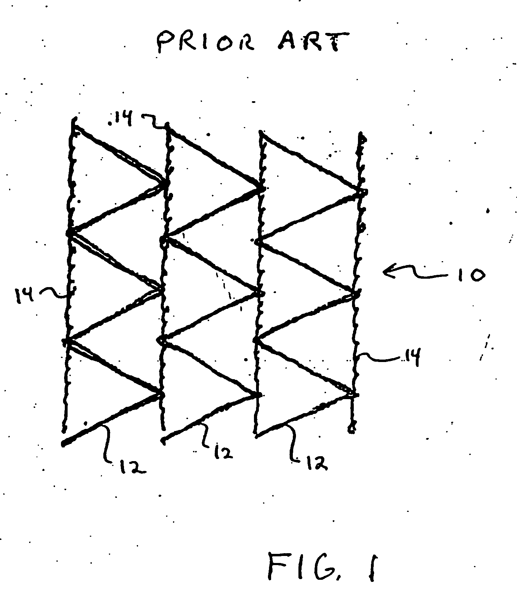

Figure 1 of the accompanying drawings shows a prior art knitted Raschel netting 10 including schuss ribbons 12 and franze ribbons 14 of the type described in US Patent No. 5104714. Because of the triangular pattern in the knitted netting, all Raschel netting becomes narrower when pulled lengthwise. For example, when wrapping a pallet with conventional Raschel netting, when the netting is stretched about 60%, the netting may change in width from 50cm to about 25cm. When a longitudinal force is applied to the knitted netting, the franzes become longer. The longer the franze gets, the longer the schuss must be to maintain the same netting dimensions. However, up to a certain degree of elongation, the schuss does not extend because the schuss tends to straighten rather than elongate. The straighter the schusses, the smaller the distance between franzes, and the narrower the netting becomes resulting in transverse shrinkage of the knitted netting.

Transverse shrinkage has been inherent in Raschel knitted netting for as long as machines to produce such knitted netting have existed. It is well known that conventional Raschel netting becomes narrower even while being knitted on Raschel knitting machines. For example, if 48" Raschel knitted netting is desired, about 50" netting is knitted because the netting becomes narrower by about 2" between the knitting and the winding zones.

When a constant netting width is needed, the width can be regulated by changing the schuss tension in the knitting machine. The producers of knitted netting machines provide a facility on their machines to regulate the netting width, which depends on many factors including the type of material, temperature, ribbon dimensions, knitting tension, and knitting pattern. The knitting machine producers are aware that netting shrinkage is inherent in Raschel knitted netting. Such producers are also aware that increased tension on the schuss creates a narrower netting and loosened tension on the schuss prevents narrowing to some degree. Changing the schuss tension, however, is insufficient to fully overcome transverse shrinkage in knitted netting.

US patent No. 4781291 acknowledges that a problem with Raschel knitted netting is that it shrinks in overall width when pulled lengthwise due to the geometric pattern of the knitted netting and proposes a netting of square openings, instead of Raschel triangles, to solve the problem. By having transverse strands perpendicular to the longitudinal strands, creating rectangular openings instead of triangular, transverse shrinkage is overcome.

Accordingly, there is a need in the art for a knitted netting which does not shrink at all during the production process. Further, there is a need in the art for a knitted netting that maintains its full width during production and may also be widened to more than its full production width.

With the foregoing in mind, the Modified Schuss Knitted Netting of the present invention provides a "modified" schuss relative to the schuss of conventional knitted netting. A modified schuss is a schuss whose length is as long as is desired, which is in excess of and distinct from conventional knitted netting with schuss loosened only to the maximum permitted by the knitting machine.

It is known from US-A-4569439 to provide a knitted netting which includes longitudinal polyolefin ribbons and lateral polyolefin ribbons knitted with the longitudinal polyolefin ribbons on a machine. DE-A-4301232 also discloses a knitted netting comprising longitudinal strands and lateral strands knitted with the longitudinal strands to form knitted netting.

A knitted netting according to the present invention is defined by claim 1. Claim 7 recites a method of making same.

The invention further provides use of knitted netting for wrapping a cylindrical bale of agricultural crops having longitudinal polyolefin ribbons and lateral polyolefin ribbons knitted with the longitudinal polyolefin ribbons to form knitted netting, the lateral polyolefin ribbons of the knitted netting having an actual schuss length more than 110% of a calculated schuss length for the knitted netting and the knitted netting extending about the circumference and over the edge of the cylindrical body enclosing and maintaining the crops therein.

Preferred embodiments of the invention will now be described, by way of example only, with reference to the accompanying drawings, in which:

Figure 1 shows a prior art knitted Raschel netting;
Figure 2 shows a knitted Raschel netting in accordance with the invention;
Figure 3a illustrates a roll of knitted netting;
Figure 3b illustrates a partially unrolled roll of knitted netting;
Figure 3c illustrates calculation of schuss length for knitted netting;
Figure 4a shows a corrugated trick plate for use in a knitting machine;
Figure 4b shows a single round piece for use with a corrugated trick plate;
Figure 5 shows a shrinkage/elongation curve for conventional knitted netting;
Figure 6 shows a shrinkage/elongation curve for knitted netting according to the invention;
Figure 7 shows a hay bale wrapped with conventional knitted netting; and
Figure 8 shows a hay bale wrapped with knitted netting according to the invention.

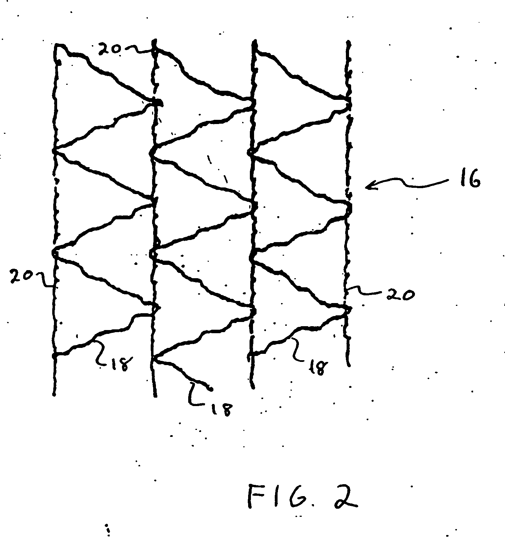

Figure 2 shows a knitted Raschel netting 16 in accordance with the invention which has a "modified" schuss 18 relative to the schuss of conventional knitted netting. The modified schuss has a length longer than the schuss length obtained when loosened to the maximum permitted by the knitting machine. For example, a knitted netting including a modified schuss that is about 30% longer than the prior art schuss provided by the knitting machine becomes narrower by about 12% at 60% elongation of the knitted netting during wrapping, while the same netting without modified schuss becomes narrower by about 50% at 60% elongation.

The schuss is created by moving the schuss ribbon between two needles while the netting being knitted moves longitudinally in the knitting machine. Because of the two directional movement, the schuss 18 creates legs of a triangle while the franze 20 creates a triangle base. The tension of the schuss can be adjusted, but is limited and can only produce schuss with an actual length less than 110% of the calculated length of the leg of the triangle created by moving the schuss ribbon between two needles at the longitudinal speed.

The preferred amount of elongation of the schuss length depends upon the particular netting application. For elastic pallet wrapping, the preferred actual schuss length is about 135% of the calculated schuss length for the netting. For conventional wrapping netting with an elongation at break of about 20%, a modified schuss is not needed because such netting only elongates about 1-3% in normal use and does not exhibit transverse shrinkage.

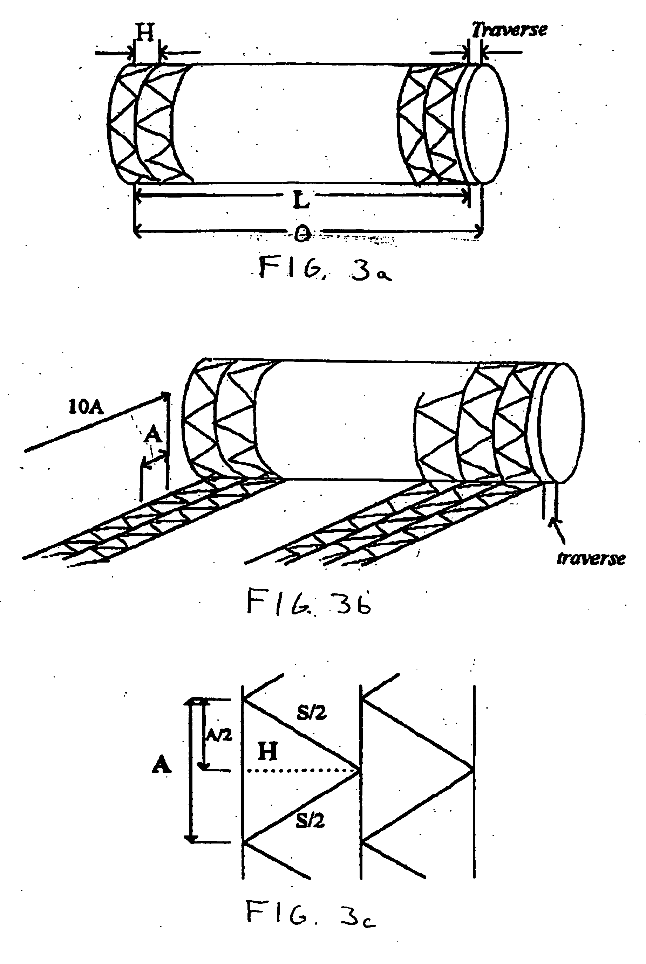

The characteristics of the Modified Schuss Knitted Netting of the present invention may be seen by comparing an actual schuss length of a given netting length with a calculated schuss length. Modified Schuss Knitted Netting of the invention has an actual schuss length more than 110% of the calculated schuss length. The suggested procedure for comparing actual schuss length with calculated schuss length is illustrated in Figures 3a and 3c and may be described as follows:

1) Measure the length (L) between the two extreme franzes on a roll of knitted netting as shown in Figure 3a. (The overall roll length is shown as O).

2) Divide the length (L) by the number of franzes minus one to define an average distance between two franzes (H).

3) Unroll some of the knitted netting and measure the length between 10 such distances (10A) and divide them by 10 to define an average length between two triangle legs (A) as shown in Figure 3b. This measurement should be performed while applying about 50g to the franzes on which the schuss will be measured.

4) Calculate the schuss (S) length between two triangle legs as shown in Figure 3c as follows:

$$ S = 2\left( \sqrt{(A/2)^2 + H^2} \right) $$

5) Determine an actual schuss length for distance 10A by unrolling some of the knitted netting and transversely cutting the franzes and schusses. Take out the schuss between two franzes and measure the length of the schuss while flattening the schuss on a flat plate to determine the actual schuss length (ASL).

6) For Modified Schuss Knitted Netting of the invention, ASL will exceed 10S by more than 10%.

Existing Raschel knitting machines do not provide a facility for providing a modified schuss in accordance with the present invention. The maximum loosened schuss which can be knitted on these machines can at best widen the netting a little bit, but even so the netting will tend to narrow.

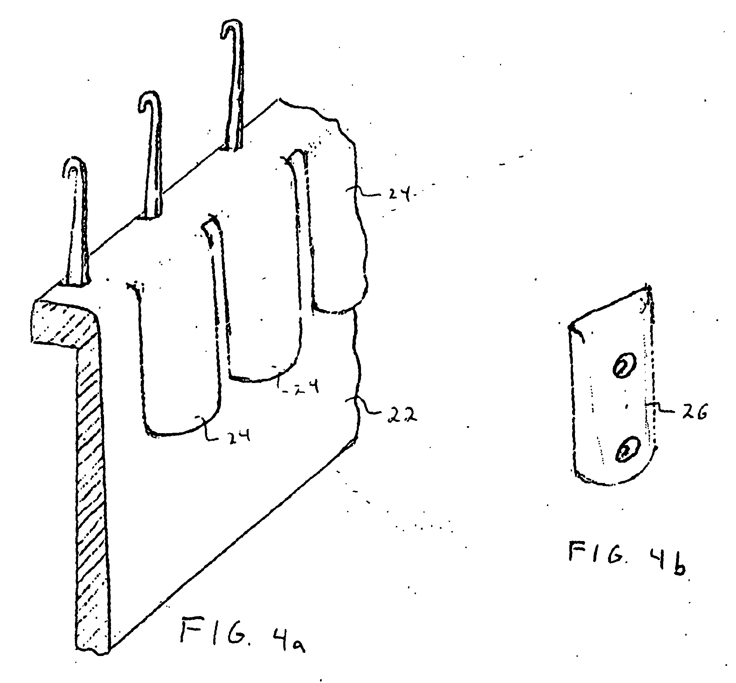

In order to create the modified schuss according to the invention and to overcome such knitting machine limitations, a corrugated trick plate as shown in Figure 4a may be incorporated into the knitting machine. The use of a conventional trick plate is illustrated, for example, in US patent No. 3646782. The corrugated trick plate includes a flat plate 22 providing corrugations 24 which force the schusses to traverse a longer distance as the schusses move between the knitting machine needles than would be traversed in a conventional knitting machine. The schusses cannot move in a straight line; the schusses must follow the curvature of the corrugated trick plate. Accordingly, when the knitted netting leaves the corrugated trick plate, the schuss length is longer than the original. The thicker the corrugations between needles on the flat plate, the longer the schusses that are produced.

Where an equal amount of schuss modification is needed over the complete netting width, a corrugated plate as described with respect to Figure 4a may be used. Where modified schuss is required only on particular schusses, a flat plate absent corrugations (not shown) may be used to produce a thicker area between particular needles. This can be achieved by attaching a round piece 26 to the flat plate by means of a screw or other suitable fastener. Round piece 26 is shown in Figure 4b.

With the Modified Schuss Knitted Netting it is not possible to regulate the netting width by increasing the schuss tension as was done in conventional knitted netting. When knitting with modified schuss, the width will always remain the same and will be a function of the number of needles and the distance between them. There will be no shrinking during the knitting process.

The width in the Modified Schuss Knitted Netting can differ only in quantum amounts equivalent to the distance between needles.

It may be appreciated that there are many distinct advantages to the present invention. Insertion or removal of a single round piece is simple. Locating the right parts in the right place when different amounts of schuss modification are needed at different places across the netting is simplified, as a different thickness of the single round piece can be used.

It is important that when the same amount of schuss modification is needed over the netting width, a single corrugated trick plate (as shown in Figure 4a) may be used.

The amount of schuss modification created on the complete netting width can be varied to some degree by regulating the schuss tension. This is done by regulating the schuss tension on the existing machine. Only when a different amount of modified schuss across the netting width is needed would different single round pieces (distinguishable by their different thicknesses) be used.

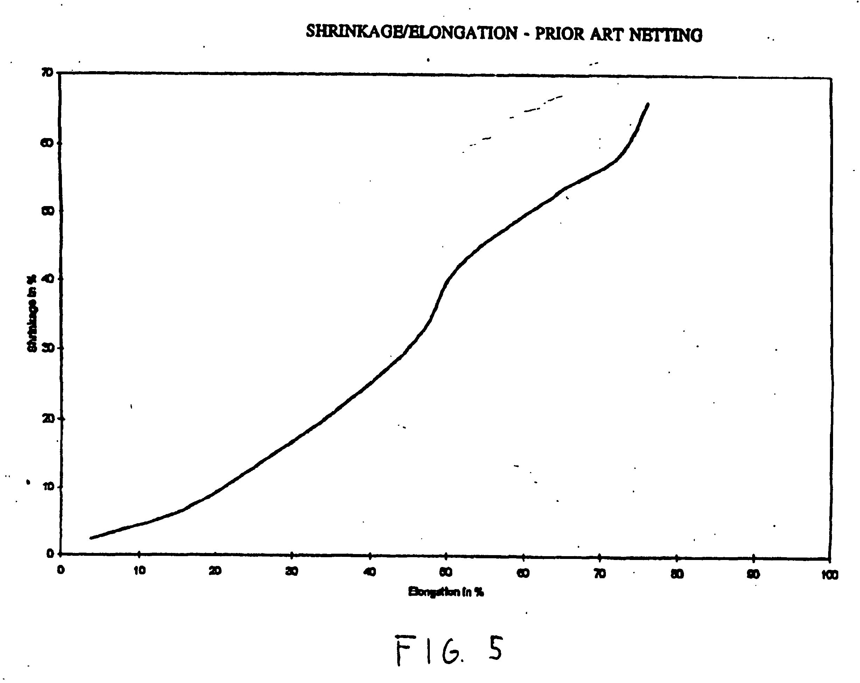

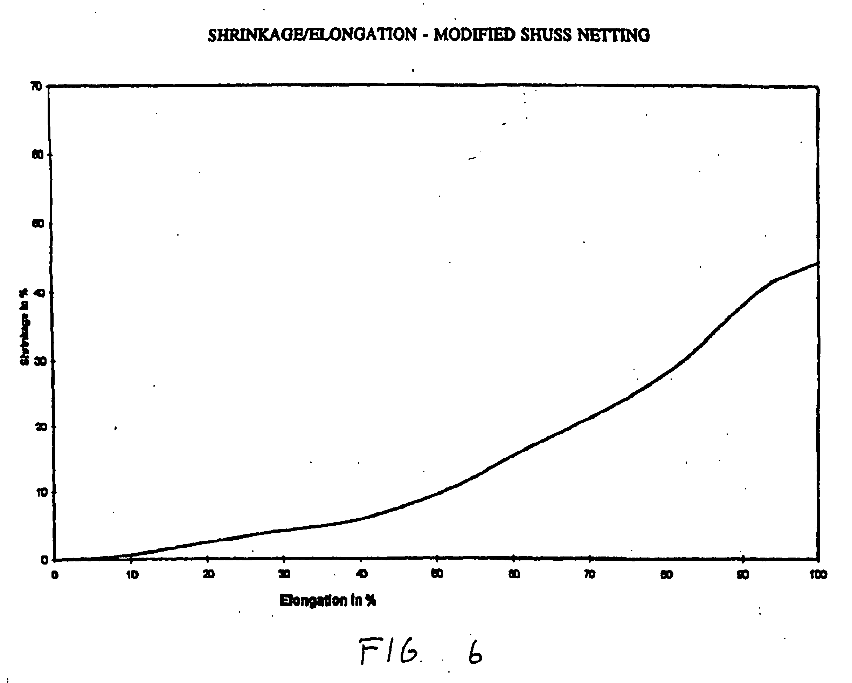

It will be appreciated by those skilled in the art that the Modified Schuss Knitted Netting according to the invention provides many unexpected advantages over conventional knitted netting. In particular, the Modified Schuss Knitted Netting is somewhat stronger, perhaps because the schusses do not create radial stresses on the franzes as in conventional knitted netting. Comparing Figures 5 and 6, it will be appreciated that the slope of the shrinkage/elongation curve created by the Modified Schuss Knitted Netting is a function of the amount by which the schuss is modified. A very small degree of shrinkage always occurs in the Modified Schuss Knitted Netting at the moment when longitudinal force is applied.

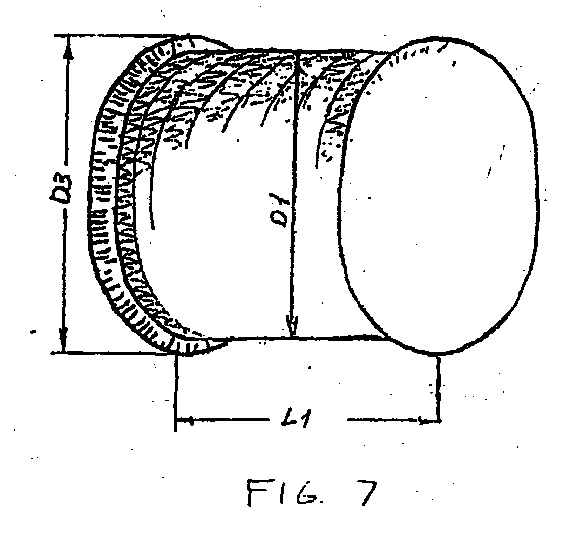

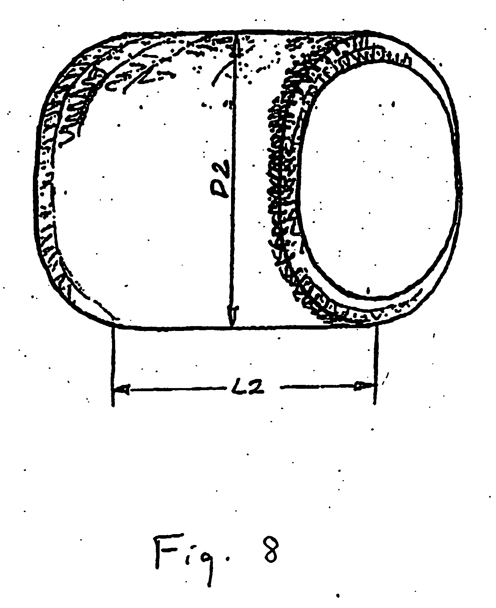

Comparing Figures 7 and 8, when wrapping a round hay bale by using Modified Schuss Knitted Netting wider than the bale, a considerable amount of over-edge coverage is achieved considering the number of franzes on the outside of the hay bale. (Note that in the Figures D1=D2, L1=L2, and D3>D2). Over-edge-wrapping of hay bales provides the advantage of increasing the covered area on both sides of the bale. Because the franze length would be reduced on the smaller diameter at the extremities, some folding or pleating would be expected to occur as the net spread over the edge. However, the amount of over-edge coverage has been found to be a function of the net elongation while wrapping and the amount of modified schuss. For example, if the circumference length of the last franze is x% shorter and the bale wrapping is performed with an x+1% stretch, then the last franze will create a 1% elongation. In this case, even if the shorter franze stretches only 1%, the schusses spread to their maximum length with respect to the length of the modified schuss. Therefore, the distance between the two franzes in this case is larger than the distance between the two needles on the machine. The netting merely does not shrink in width when wrapped around the bale (the distances between franzes remain nearly constant without narrowing), but on both sides of the bale, the distance between franzes becomes more than the distance between needles, due to radial forces that are created which spread the schusses to their maximum modified length.

In addition to the foregoing properties, the modified netting of the invention can also be widened to more than its original width, even where longitudinal force is applied on the netting. Such phenomenon is created on the peripheral portions of the bale as discussed above.

The present invention is applicable to all kinds of netting containing longitudinal franze and lateral schusses. Even in netting with horizontal schusses which create quadrant openings there will be an advantage if it is knitted with modified schuss. Such netting usually does not shrink on its widthwise direction; but without modified schuss it could not be widened to more than its original width. Further, the present invention is not limited to any particular polyolefin ribbon(s) which can be made of strands, tapes, monofilament, multifilament, or the like. Still further, it will be appreciated that a knitted netting may be produced with only some loosened schusses on both sides or at any place along the net width, the netting can be widened during wrapping process, at any predetermined area of the wrapped load, etc.

Knitted netting may also be produced with different amounts of schuss modification. If a given number of franzes are over the edge, by using higher schuss modification on those franzes would create higher coverage on both bale sides.

In a preferred embodiment the plurality of polyolefin ribbons in at least one of the lateral polyolefin ribbons may be located on the outside edges of the knitted netting or in all of the lateral polyolefin ribbons.

**Claims**

1. A knitted netting comprising longitudinal polyolefin ribbons (20), lateral polyolefin ribbons (18) knitted with said longitudinal polyolefin ribbons (20) on a machine to form a knitted netting **characterised in that** when rolled as knitted on the machine, at least one of said lateral polyolefin ribbons (18) of said knitted netting has an actual length more than 110% of the length of a calculated schuss length for said knitted netting, said knitted netting exhibiting reduced lateral shrinkage upon elongation, relative to netting produced from ribbons (18) having the length of a calculated schuss length for the knitted netting, wherein the netting has an elongation at break of more than 20 %.

2. A knitted netting in accordance with claim 1, **characterised in that** said at least one of said lateral polyolefin ribbons (18) comprises a plurality of polyolefin ribbons.

**3.** A knitted netting in accordance with claim 2 **characterised in that** said plurality of polyolefin ribbons (18) are on the outside edges of the knitted netting.

**4.** A knitted netting in accordance with claim 2 or claim 3 **characterised in that** said plurality of polyolefin ribbons (18) comprises all of said lateral polyolefin ribbons.

**5.** A knitted netting in accordance with claims 1 to 4 **characterised in that** the knitted longitudinal ribbons (20) and lateral ribbons (18) form a pattern of triangularly shaped openings.

**6.** Use of a knitted netting in accordance with claims 1 to 5 for wrapping a cylindrical bale of agricultural crops **characterised in that** said knitted netting extends about the circumference and over edges of said cylindrical bale to maintain the crops therein.

**7.** A method of producing knitted netting in a knitting machine, comprising supplying lateral polyolefin ribbons (18), supplying longitudinal polyolefin ribbons (20), adjusting at least one of the lateral polyolefin ribbon paths in the knitting machine, knitting the lateral polyolefin ribbons (18) knitted with the longitudinal polyolefin ribbons (20) to form a knitted netting (16) **characterised in that** said step of adjusting at least one of the lateral polyolefin ribbons paths results in a lateral polyolefin ribbon (18) in the knitted netting when rolled as knitted on the machine, having an actual length more than 110% of the length of a calculated schuss length for the knitted netting, said knitted netting exhibits reduced lateral shrinkage upon elongation, relative to netting produced from ribbons (18) having the length of a calculated schuss length for the knitted netting, wherein the netting has an elongation at break of more than 20 %.

**8.** A method of producing knitted netting in a knitting machine as claimed in claim 7 **characterised in that** the step of adjusting at least one of the lateral polyolefin ribbon paths further comprises using a corrugated trick plate (22) in the knitting machine.

**Patentansprüche**

**1.** Gewirktes Netzgewebe, umfassend Polyolefin-Längsbänder (20), Polyolefin-Querbänder (18), die mit den Polyolefin-Längsbändern (20) auf einer Maschine gewirkt werden, um ein gewirktes Netzgewebe zu bilden, **dadurch gekennzeichnet, dass**, wenn sie gerollt werden, wie sie auf der Maschine gewirkt wurden, mindestens eines der Polyolefin-Querbänder (18) des gewirkten Netzgewebes eine tatsächliche Länge aufweist, die mehr als 110 % der Länge der berechneten Schusslänge für das gewirkte Netzgewebe beträgt, wobei das gewirkte Netzgewebe eine reduzierte Querschrumpfung nach Dehnung zeigt, relativ zu Netzgewebe, das aus Bändern (18) mit der Länge einer berechneten Schusslänge für das gewirkte Netzgewebe hergestellt wurde, wobei das Netzgewebe bei Bruch eine Dehnung von mehr als 20 % hat.

**2.** Gewirktes Netzgewebe nach Anspruch 1, **dadurch gekennzeichnet, dass** mindestens eines der Polyolefin-Querbänder (18) eine Vielzahl von Polyolefin-Bändern umfasst.

**3.** Gewirktes Netzgewebe nach Anspruch 2, **dadurch gekennzeichnet, dass** die Vielzahl von Polyolefin-Bändern (18) an den Außenrändern des gewirkten Netzgewebes ist.

**4.** Gewirktes Netzgewebe nach Anspruch 2 oder Anspruch 3, **dadurch gekennzeichnet, dass** die Vielzahl von Polyolefin-Bändern (18) sämtliche der Polyolefin-Querbänder umfasst.

**5.** Gewirktes Netzgewebe nach den Ansprüchen 1 bis 4, **dadurch gekennzeichnet, dass** die gewirkten Längsbänder (20) und Querbänder (18) ein Muster von dreieckförmigen Öffnungen bilden.

**6.** Verwendung eines gewirkten Netzgewebes nach den Ansprüchen 1 bis 5 zum Umwickeln eines zylindrischen Ballens von landwirtschaftlichem Erntegut, **dadurch gekennzeichnet, dass** das gewirkte Netzgewebe sich um den Umfang und über die Ränder des zylindrischen Ballens erstreckt, um das Erntegut darin zu halten.

**7.** Verfahren zum Herstellen von gewirktem Netzgewebe in einer Wirkmaschine, umfassend Zuführen von Polyolefin-Querbändern (18), Zuführen von Polyolefin-Längsbändern (20), Anpassen mindestens eines der Polyolefin-Querbandwege in der Wirkmaschine, Wirken der Polyolefin-Querbänder (18), die mit den Polyolefin-Längsbändern (20) gewirkt werden, um ein gewirktes Netzgewebe (16) zu bilden, **dadurch gekennzeichnet, dass** der Schritt des Anpassens mindestens eines der Polyolefin-Querbandwege in einem Polyolefin-Querband (18) in dem gewirkten Netzgewebe resultiert, das, wenn es gerollt wird, wie es auf der Maschine gewirkt wurde, eine tatsächliche Länge von mehr als 110 % der Länge einer berechneten Schusslänge für das gewirkte Netzgewebe aufweist, wobei das gewirkte Netzgewebe eine reduzierte Querschrumpfung nach Dehnung zeigt, relativ zu Netzgewebe, das aus Bändern (18) mit der Länge einer berechneten Schusslänge für das gewirkte Netzgewebe hergestellt wurde, wobei das Netzgewebe bei Bruch eine Dehnung von mehr als 20 % hat.

**8.** Verfahren zum Herstellen von gewirktem Netzgewebe in einer Wirkmaschine nach Anspruch 7, **dadurch gekennzeichnet, dass** der Schritt des Anpassens mindestens eines der Polyolefin-Querbandwege weiter umfasst, eine geriefte Musterplatte (22) in der Wirkmaschine zu verwenden.

**Revendications**

**1.** Filet tricoté comprenant des rubans longitudinaux en polyoléfine (20), des rubans latéraux en polyoléfine (18) tricotés avec lesdits rubans longitudinaux en polyoléfine (20) sur une machine pour former un filet tricoté, **caractérisé en ce que**, lorsqu'il est roulé tel que tricoté sur la machine, au moins un desdits rubans latéraux en polyoléfine (18) dudit filet tricoté a une longueur réelle supérieure à 110 % de la longueur d'une longueur de schuss calculée pour ledit filet tricoté, ledit filet tricoté présentant un rétrécissement latéral réduit lors de l'allongement par rapport à un filet produit à partir de rubans (18) ayant la longueur d'une longueur de schuss calculée pour le filet tricoté, le filet ayant un allongement à la rupture de plus de 20 %.

**2.** Filet tricoté selon la revendication 1, **caractérisé en ce qu'**au moins un desdits rubans latéraux en polyoléfine (18) comprend une pluralité de rubans en polyoléfine.

**3.** Filet tricoté selon la revendication 2, **caractérisé en ce que** ladite pluralité de rubans en polyoléfine (18) se trouve sur les bords latéraux du filet tricoté.

**4.** Filet tricoté selon la revendication 2 ou la revendication 3, **caractérisé en ce que** ladite pluralité de rubans en polyoléfine (18) comprend la totalité desdits rubans latéraux en polyoléfine.

**5.** Filet tricoté selon les revendications 1 à 4, **caractérisé en ce que** les rubans longitudinaux tricotés (20) et les rubans latéraux (18) forment un modèle d'ouvertures de forme triangulaire.

**6.** Utilisation d'un filet tricoté selon les revendications 1 à 5 pour envelopper une botte cylindrique de récoltes agricoles, **caractérisé en ce que** ledit filet tricoté s'étend autour de la circonférence et au-dessus des bords de ladite botte cylindrique afin de maintenir les récoltes à l'intérieur.

**7.** Procédé de production d'un filet tricoté dans une machine à tricoter, comprenant l'alimentation de rubans latéraux en polyoléfine (18), l'alimentation de rubans longitudinaux en polyoléfine (20), le réglage d'au moins un chemin pour rubans latéraux en polyoléfine dans la machine à tricoter, le tricotage des rubans latéraux en polyoléfine (18) tricotés avec les rubans longitudinaux en polyoléfine (20) pour former un filet tricoté (16), **caractérisé en ce que** ladite étape de réglage d'au moins un des chemins pour rubans latéraux en polyoléfine a pour résultat qu'un ruban latéral en polyoléfine (18) dans le filet tricoté lorsqu'il est roulé comme tricoté sur la machine a une longueur réelle supérieure à plus de 110 % de la longueur d'une longueur de schuss calculée pour le filet tricoté, ledit filet tricoté présentant un rétrécissement latéral réduit lors de l'allongement, par rapport au filet produit à partir de rubans (18) ayant la longueur d'une longueur de schuss calculée pour le filet tricoté, dans lequel le filet a un allongement à la rupture supérieur à plus de 20 %.

**8.** Procédé de production d'un filet tricoté dans une machine à tricoter selon la revendication 7, **caractérisé en ce que** l'étape de réglage d'au moins un des chemins pour rubans latéraux en polyoléfine comprend en outre l'utilisation d'une plaque d'abattage ondulée (22) dans la machine à tricoter.

PRIOR ART

FIG. 1

FIG. 2

FIG. 3a

FIG. 3b

FIG. 3c

FIG. 4b

FIG. 4a

SHRINKAGE/ELONGATION - PRIOR ART NETTING

FIG. 5

EP 1 371 768 B1

## SHRINKAGE/ELONGATION - MODIFIED SHUSS NETTING

FIG. 6

EP 1 371 768 B1

FIG. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5104714 A
- US 4781291 A
- US 4569439 A
- DE 4301232 A
- US 3646782 A